# EUROPEAN PATENT SPECIFICATION

(11) **EP 1 662 242 B1**
(45) Date of publication and mention of the grant of the patent: **30.07.2008**
(21) Application number: 04425889.5
(22) Date of filing: 25.11.2004
(51) Int. Cl.: G01L 9/00, G01L 19/04, G01L 23/18

(54) **Pressure sensor with compensation of the thermal expansion of its housing**
Drucksensor mit Kompensation der Gehäusewärmeausdehnung
Capteur de pression avec compensation de la dilatation thermique de son boîtier

(43) Date of publication of application: 31.05.2006
(73) Proprietor: Gefran S.p.A., 25050 Provaglio d'Iseo (Brescia) (IT)
(72) Inventor: Obermeier, Ernst, 14050 Berlin (DE); Fagnani, Giorgio, 25080 Mazzano (Brescia) (IT); Cibinetto, Lucio, 20048 Carate Brianza (Milano) (IT); Doneda, Sergio, 25055 Pisogne (Brescia) (IT)
(74) Representative: Leihkauf, Steffen Falk

(56) References cited:
- EP-A- 0 855 585
- EP-A- 1 098 182
- WO-A-20/05001408
- PATENT ABSTRACTS OF JAPAN vol. 013, no. 245 (P-881), 8 June 1989 (1989-06-08) -& JP 01 046619 A (MATSUSHITA ELECTRIC IND CO LTD), 21 February 1989 (1989-02-21)

## Description

### Field of Application

The present invention relates to a sensor adapted for picking up the pressure level of a fluid within a determined ambient having a determined temperature.

The sensor according to this invention is adapted, especially though not solely, to pick up the pressure level of fluids in a situation of high working temperature, as plastics, plastic films, and synthetic fibers which are inside an extrusion chamber.

More in particular, the sensor according to this invention is of a type which comprises a case of elongate shape along a determined major axis, which case has a sensing end portion intended for exposure in contact with the fluid, a tip associated with the sensing end portion for being driven under the fluid pressure, and a pressure transducer mounted within the case and arranged in push contact with the tip for picking up the pressure applied thereto by the tip and generating an electric signal corresponding to the fluid pressure.

### Prior Art

The demand for sensors specially designed to pick up the pressure level of fluids going through extruders or the like devices operated at high pressures and temperatures is well recognized.

A known pressure sensor comprises an elongate case exposed to the fluid, which case defines on its interior a substantially sealed chamber wherein pressure-sensitive working members are arranged and well protected.

The sensor includes, as its working element, a pressure transducer, which has a working membrane and is adapted to pick up a given pressure applied thereto and generate a corresponding electric signal to that pressure.

The sensor further includes a stiff tip, which is associated with the case for the purpose of communicating the pressure tn the transducer membrane.

The pressure is measured in the following way.

The sensor is placed substantially probe-fashion in contact with the fluid tn be measured, and the tip driven by the fluid pressure is push to inflect the membrane of the pressure transducer.

Conventional sensors, although being functional to measure fluid pressure, have a drawback that is not easily overcome: they fail to yield pressure readings that are accurate and constant as the fluid temperature varies, especially where the temperatures involved are very high.

In other words, the response from the pressure sensor is not constant as temperature varies, so that the measurements are not at all times repeatable. This is apparent especially on the occurrence of substantial changes in the temperature at which the sensor is set to operate.

For example a known pressure sensor is disclosed in EP 0 855 585 on which the preamble of claim 1 is based.

As a result, it has been impossible to use conventional sensors in devices whose working temperature can exceed 500°C as is the case, for instance, with equipment employed to extrude and inject determined classes of polymers, such as fluoropolymers and liquid crystal polymers.

The technical problem underlying this invention is to provide a pressure sensor, which overcomes the aforementioned drawbacks by guaranteeing accurate measurements of fluid pressure even at high fluid temperatures of 500°C and higher.

### Summary of the Invention

The above technical problem is solved by a pressure sensor as defined in claim 1 which, according to the invention, comprises a holder for supporting the pressure transducer having a thermal expansion coefficient selected such that, as the temperature varies, the expansion of the holder along the axis will equal the axial expansion of the case, thereby to keep the value, or intensity, of the push contact unchanged as the temperature varies under the same pressure of the fluid. The sensor also comprises a weld to weld a portion of the holder to an end of the case, thereby forming a O-reference point.

Additional characteristics and the advantages of the pressure sensor according to the invention will be apparent from the following description, of some embodiments thereof given by way of indicative and non-limiting example with reference to the annexed drawings.

### Brief Description of the Drawings

Figure 1 illustrates a cross-sectional view through a pressure sensor according to the invention.
Figure 2 illustrates a view of the sensor as in Figure 1 wherein a distribution of thermal expansions for the sensor components is shown.
Figure 3 illustrates a view of a pressure sensor of the invention according to a first further embodiment.
Figure 4 illustrates a view of a pressure sensor of the invention according to a second further embodiment.

### Detailed Description

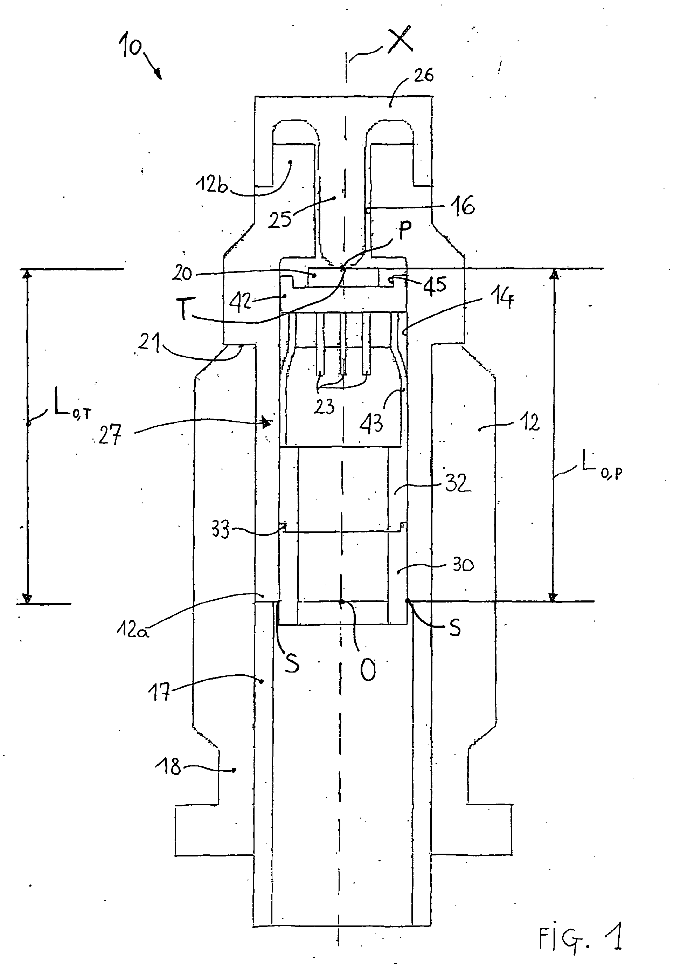

With reference to annexed Figure 1, with the reference numeral 10 is globally indicated a pressure sensor according to the present invention.

Specifically, the sensor 10 is intended for installation, substantially probe-like fashion, in plastic extrusion equipment for the purpose of picking up the pressure level of a polymer fluid. It should be understood, however, that the sensor 10 could be used for measuring the pressure of any liquid or gaseous fluid being used in different devices or systems.

The sensor 10 comprises an elongate outer case 12 having a major reference axis X. Specifically, the case 12 has a substantially tubular shape, with an inner chamber 14 extending along the axis X.

More particularly, at a first end 12a the outer case 12 is secured coaxial on a tubular body 17 for protecting electric cables 23, shown partially in Figure 1, from the outer ambient, which have at the end contact pins.

A threaded nipple 18 is arranged for attaching the sensor to the extrusion machine. This nipple 18 encloses the case 12 and tubular body 17, and is arranged to bear on a surface 21 of the case 12 such that the sensor 10 is held stable and securely in the extrusion machine.

A second end 12b of the case 12, i.e. the top end, is provided with a lead-in 16, or mouth, and forms the sensing end of the case 12 intended to be in contact with the fluid to be measured.

The sensor 10 has a tip 25 associated with the second end 12b, which, in this specific case, is inserted through the lead-in 16.

In the embodiment illustrated, the tip 25 is made integral with a metal membrane 26 which closes the lead-in 16 of the sensing end 12b and is welded to the edge of the sensing end 12b. The membrane 26 is to inflect under the pressure of the monitored fluid and communicate the pressure of the fluid to the tip 25.

The sensor 10 further includes a pressure transducer 20, which is mounted inside the case 12, specifically in the inner chamber 14, and arranged substantially coaxial with the outer case 12.

The pressure transducer 20 is arranged and held in push contact with the tip 25 to pick up the pressure applied to it by the tip 25 according to the fluid pressure, and generate a electric signal corresponding to said fluid pressure.

In the specific case, by way of an indicative and not-limiting example with respect to the present invention, the pressure transducer 20 is a device, which operates on a piezo-resistance principle to sense pressure acting upon it and issue a corresponding electric signal.

More particularly, the transducer 20 comprises a patterned device formed from semiconductor material. By way of an indicative and not-limiting example with respect to the present invention, the sensor may be fabricated with either silicon carbide, or SOI (Silicon-On-Insulator), or SOS (Silicon-On-Sapphire) technology.

The transducer 20 is connected, through the pins and associated cable conductors 23, to a remote electronic system, not shown in the drawings, for processing the issued electric signal.

According to the invention, the sensor 10 includes a holder, shown generally at 27, for supporting the pressure transducer 20, the overall thermal expansion coefficient of the holder 27 being selected such that, as the temperature varies, the axial expansion of the holder 27 will equal that of the case 12 thereby keeping the value, or intensity, of the push contact unchanged as the temperature varies under the same pressure of the fluid.

Preferably, the holder 27 is placed along the axis X at the base, i.e. at the bottom of the pressure transducer 20, and in contact with the latter.

In other words, the sensor is provided with a holder 27 placed on the opposite side of the pressure transducer 20 with respect to the tip 25 and formed from a material which is selected on the base of the material of the case 12, so that a possible thermal expansion of the case 12 can be compensated by a thermal expansion of the holder 27.

Thus, the inflection imposed on the pressure transducer 20 by the tip 25 will depend only on the actual pressure of the fluid outside, not on any deformation of the case 12 and, respectively, the holder 27.

In the specific case of Figure 1, the outer case 12 is formed from 15-5 PH H900 steel, a material resistant to high temperatures in excess of 500°C and having a thermal expansion coefficient of approximately 11.6x10⁻⁶ °C⁻¹.

Preferably, the tip 25 and membrane 26 are also made of 15-5 PH H900 steel.

In this specific case, the holder 27 includes a plurality of components: a plate-like insulating element 42 placed in direct contact with the transducer 20, a bell-shaped element 43 surrounding the electric cables 23 and being welded to the insulating element 42 at the bottom of the latter, and a base body comprising two elements 30, 32 mounted in a line with the bell-shaped element 43 at the bottom of the latter.

In the embodiment illustrated, the two elements 30, 32 are superimposed axially within the inner chamber 14, being each in the form of cylindrical tube sections and welded together and to the bell-shaped element 43.

It should be noted, moreover, that the two elements 30, 32 are only connected around their circular edges, where they have mutual coupling teeth 33.

The two elements 30, 32 and bell-shaped element 43 are all in one line along the axis X and welded to the outer case 12 coaxial therewith.

In particular, the weld is arranged to connect the first end 12a of the case to the first 30 of the two elements. This weld is indicated in Figure 1 with reference letter S.

By way of an indicative and non-limiting example with respect to the present invention, the first element 30 would be made of 304L steel and has a coefficient of thermal expansion of approximately 18.3x10⁻⁶ °C-1.

The second element 32 is made of 15-5 PH H900 steel which, as mentioned before, has a thermal expansion coefficient of approximately 11.6x10⁻⁶ °C⁻¹.

The bell-shaped element 43 is formed from Kovar and has a thermal expansion coefficient of approximately 4.9x10⁻⁶°C⁻¹, and the insulating element 42 from alumina having a thermal expansion coefficient of approximately 4x10⁻⁶°C⁻¹.

By analysing the materials chosen for the holder 27 it can be noted that the coefficient of thermal expansion of the insulating element 42 is lower than the coefficient of thermal expansion of the case 12, and that the base body formed of the element pair 30, 32 has a coefficient of thermal expansion which is higher than the coefficient of thermal expansion of the case 12.

Thus, the overall thermal expansion of the holder 27, as being the sum of the thermal expansion of the insulating element 42 plus that of the element pair 30, 32, is globally equal to the thermal expansion of the case 12 and the tip 25 associated therewith.

How thermal compensation is achieved between the case 12 and the holder 27 will now be explained in detail.

Under a determined condition of operation, i.e. on a given working temperature being reached, the tip 25 responds to the pressure conditions that prevail inside the fluid-extruding chamber by applying a determined force through an end point P of the tip to a point T of the transducer 20.

As a result, a determined electric signal is issued by the transducer 20, and finally a determined value of the fluid pressure picked up by the sensor 10.

As a temperature variation occurs at which the sensor 10 is set to operate, the thermal expansions brought about by the change in temperature will affect all the parts involved and a variation of a determined value in the gap L_{OP} between a 0-reference point and the point P will occur, due to the expansion of the case 12, membrane 26 and tip 25.

The 0-reference point is selected at the level of weld S.

Likewise the gap L_{OT} between the 0 point and the point T will change for a determined value due to the expansion of the elements 30, 32 forming the base body, the bell-shaped element 43, and the insulating element 42.

According to the invention, the materials of the holder 27, i.e. of the elements 30, 32 forming the base body, bell-shaped element 43 and insulating element 42, are selected to have a global expansion coefficients appropriate to determine a equalization of both determined values of expansion.

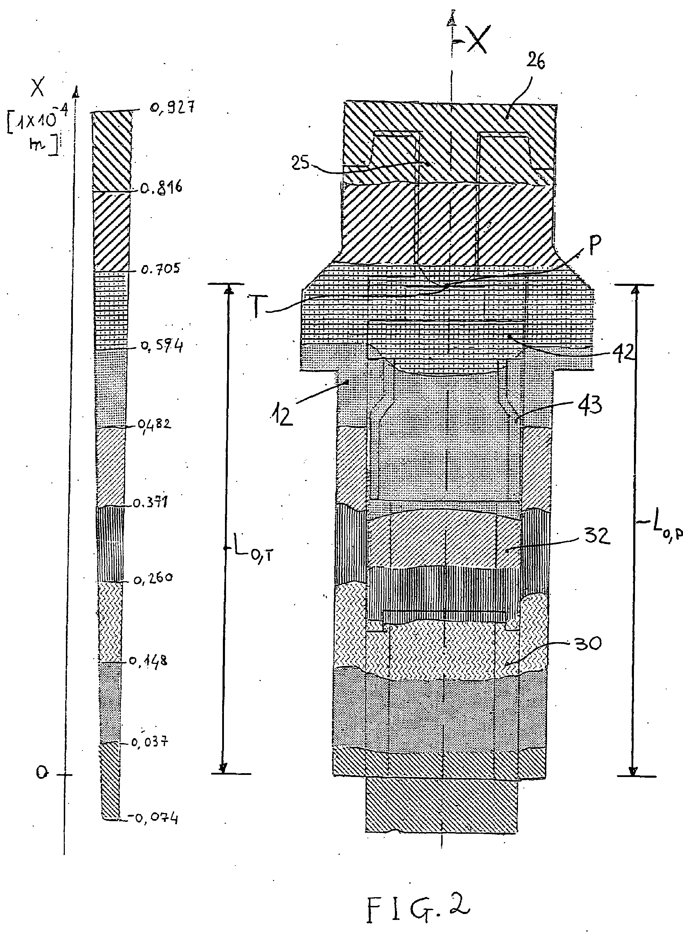

With reference to Figure 2, the sensor 10 is depicted by a distribution of thermal expansion rates.

In particular, the sensor 10 has been divided into a plurality of differently hatched zones according to the local rates of thermal expansion that occur at a determined temperature.

One hatching indicates, in accordance with the accompanying legend, the axial rates of expansion of the components of sensor 10 relative to the 0-reference point. For example, the membrane 26 locates in a zone where the maximum rate of thermal expansion is 92.7 microns, while the expansion rate for contact point TP is within the range of 59.4 to 70.5 microns.

It should be noted that similarly hatched areas for the case 12 and the holder 27 are no true matches along the X axis. This is due to the holder 27 and the case 12 expanding locally at different rates.

According to this invention, however, the end portion P of the tip 25 and the point T on the transducer 20 locate in similarly hatched zones. It means that they expand equally along the axis X, thereby ensuring that the value of the push contact will remain unchanged as the temperature varies.

It should also be noted that the absolute rate of expansion changes with the temperature of the fluid being measured. However, the relative rate of expansion stay unchanged between the end portion P of the tip 25 and the end portion T of the transducer 20.

This means that the distribution of hatchings is always the same at each temperature.

In the example considered, to enhance the independence of the pressure transducer 20 from structural strains of the other components, the transducer 20 is mounted in so called floating manner, i.e. it bears loosely, in a seat 45 formed in the insulating element 42.

Such a floating transducer 20 is disclosed, for instance, in Patent Application EP 1 098 182 A in the name of the Applicant.

The main advantage of this invention is that the sensor can be used for accurately measuring the pressure of fluids maintained at high temperatures of 500°C and also above, thereby minimizing possible measuring errors.

In fact, the holder, by virtue of having its overall rate of thermal expansion compensating the expansion of the outer case 12 of the sensor, does not affect the position of the pressure transducer 20.

Thus, the inflection imposed on the pressure transducer 20 by the tip 25 only depends on the actual pressure of the fluid outside.

A particular advantage of the present invention is that the case 12 can be made of steel, for instance specifically 15-5 PH H900 steel.

The advantage accrues from that such a material is resistant to the high temperatures specified hereabove and is not liable to yield stretch.

Moreover, constructional arrangements of illustrated embodiment further enhance the measurement independence from the ambient conditions prevailing on the pressure sensor.

For example, the axial superposition of the two thermal compensation elements 30, 32 ensures minimal contact surface. This further reduces the chance of local strains inadequately compensated by the element pair 30, 32 being communicated to the pressure transducer 20.

In addition, the independence from structural straining is increased in the embodiment illustrated by the pressure transducer 20 bearing on the insulating element unattached to it. This makes the pressure transducer 20 still more independent of any expansion and deformation the insulating element might undergo. Thus, a pressure measurement signal can be provided which is at all times constant and, above all, accurate.

Obviously a skilled person in the art could make changes and modifications as for the above described pressure sensor, in order to satisfy specific, contingent needs, being all the modifications under the scope of the invention as defined in the following claims.

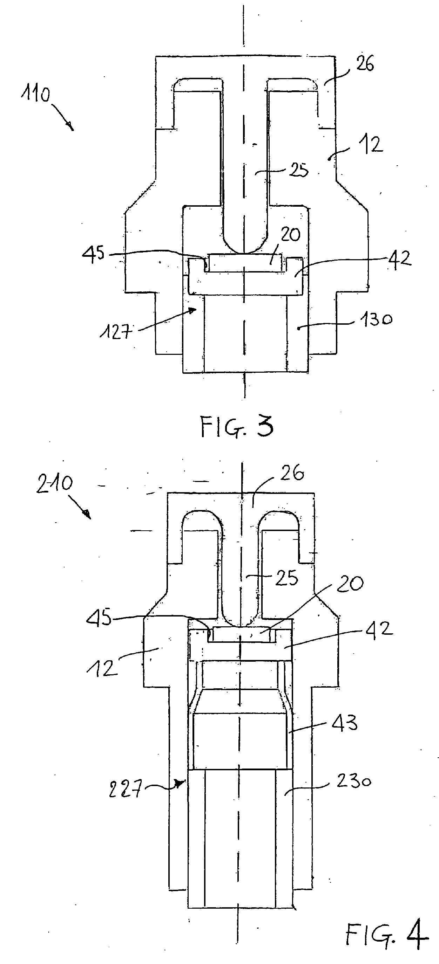

For example, in a modified embodiment illustrated in Figure 3, the sensor 110 incorporates, as a holder 127, the above-mentioned insulating element 42 and an element 130. The element 130 is in place of the bell-shaped element 43 of the previously described embodiment.

By way of an indicative and non-limiting example of this invention, compensation of thermal expansion is achieved by forming the element 130 from 316L steel having a coefficient of thermal expansion of 16.2x10⁻⁶ °C⁻¹, the insulating element 42 from alumina, and the case 12 from 15-5 PH H900 steel.

In another modification illustrated in Figure 4, the sensor 210 has, for a holder 227, the above mentioned bell-shaped element 43 and an element 230. The latter is welded to the bell-shaped element 43 axially behind it.

In this case, compensation of thermal expansion is achieved by forming the case 12 from 15-5 PH H900 steel, element 230 from 304L steel, bell-shaped element 43 from Kovar, and insulating element 42 from alumina.

In still another modification, the case 12 is formed from a titanium alloy, e.g. 6A1-4V Grade 5 titanium which is also resistant to high temperatures and has a coefficient of thermal expansion of 9.5x10⁻⁶ °C⁻¹.

## Claims

1. A sensor for picking up the pressure of a fluid placed in a given ambient and having a definite temperature, which sensor comprises:
- an elongate case (12) having a determined major axis (X), and a sensing end portion (12b) intended for exposure to the fluid and a first end (12a) opposite to the sensing end portion (12b),
- a tip (25) associated with the sensing end (12b) for operation under the fluid pressure,
- a pressure transducer (20) mounted within the case (12) in push contact at a point (T) with a point (P) of the tip (25) to pick up the pressure applied thereto by the tip (25) according to the fluid pressure, and adapted to issue an electric signal representative of said fluid pressure, and
- a holder (27) for supporting the pressure transducer (20), the holder (27) being positioned inside the case (12) on a side of the pressure transducer (20) opposite with respect to the tip (25), wherein the holder has a portion in contact with the first end (12a) of the case (12) and wherein the holder (27) has a coefficient of thermal expansion selected such that, as temperature varies, the expansion along said axis (X) of the holder (27) equals the axial expansion of the case (12), thereby keeping the amount of the push contact unchanged as temperature varies for the same pressure, **characterised in that** it comprises a weld (S) to weld said portion of the holder (27) to the first end (12a) of the case (12), the weld (S) forming a O-reference point (0), whereby gaps (L_{OT}, L_{OP}) between the O-reference point and contacting points (P, T) of the pressure transducer (20) and the tip (25) are respectfully determined, the thermal expansion of the holder (27) and the case (12) within said gaps (L_{OT}, L_{OP}) being equal.

2. A pressure sensor according to Claim 1, **characterized in that** the holder (27) is placed along the major axis (X).

3. A pressure sensor according to Claim 1, **characterized in that** the holder (27) includes at least one insulating element (42) supporting the transducer (20) and having a determined coefficient of thermal expansion which is lower than the coefficient of thermal expansion of the case (12), and a base body (30,32) having a determined coefficient of thermal expansion which is higher than the coefficient of thermal expansion of the case (12), wherein the weld (S) is formed between a portion of the base body (30, 32) of the holder and the end (12a) of the case (12).

4. A sensor according to Claim 3, **characterized in that** the insulating element (42) is formed from alumina.

5. A sensor according to Claim 3, **characterized in that** the case (12) is formed from 15-5 PH H900 steel.

6. A sensor according to Claim 3, **characterized in that** the base body comprises two elements (30,32), superposed axially on each other, each substantially in the form of a cylindrical tube section.

7. A sensor according to claim 6, wherein the two elements (30, 32) are welded together around their circular edges.

8. A sensor according to Claim 7, **characterized in that** a first (30) of the two elements is formed from 304L steel.

9. A sensor according to Claim 7, **characterized in that** a second (32) of the two elements is formed from 15-5 PH H900 steel.

10. A sensor according to Claim 7, **characterized in that** the two elements (30,32) include a means (33) of mutual mechanical coupling.

11. A sensor according to Claim 3, **characterized in that** it comprises a bell-shaped element (43) placed axially between the insulating element (42) and the base body (30,32).

12. A sensor according to Claim 11, wherein the bell-shaped element is welded, on a side, to the insulating element (42) and, on the other side, to the base body (30, 32).

13. A sensor according to Claim 12, **characterized in that** the bell-shaped element (43) is formed from Kovar having a coefficient of thermal expansion of 4.9x10⁻⁶ °C⁻¹.

14. A sensor according to Claim 3, **characterized in that** the base body comprises an element (130) of 316L steel having a coefficient of thermal expansion of 16.2x10⁻⁶ °C⁻¹.

15. A sensor according to Claim 3, **characterized in that** the base body comprises an element (230) of 304L steel having a coefficient of thermal expansion of 18.3x10⁻⁶ °C⁻¹, and a bell-shaped element (43) of Kovar having a coefficient of thermal expansion of 4.9x10⁻⁶ °C⁻¹.

16. A sensor according to Claim 1, **characterized in that** the case (12) is formed from a titanium alloy.

17. A sensor according to Claim 1, **characterized in that** the pressure transducer (20) is a device patterned on a semiconductor material.

18. A sensor according to Claim 1, **characterized in that** the pressure transducer (20) is set floating in a seat (45) formed in the insulating member (42).

## Patentansprüche

1. Sensor zum Erfassen des Drucks eines Fluids, das in einer gegebenen Umgebung angeordnet ist und eine bestimmte Temperatur aufweist, wobei der Sensor umfasst:
- ein längliches Gehäuse (12) mit einer vorgegebenen Hauptachse (X) und einem Abtastungs-Endbereich (12b), vorgesehen, um dem Fluid ausgesetzt zu werden, und einem ersten Ende (12a), das dem Abtastungs-Endbereich (12b) gegenüberliegt,
- eine Spitze (25), die mit dem Abtastungsende (12b) verbunden ist, für Arbeit unter dem Fluiddruck,
- einen Druckgeber (20), montiert in dem Gehäuse (12), in Druckkontakt an einem Punkt (T) mit einem Punkt (P) der Spitze (25), um den darauf durch die Spitze (25) entsprechend dem Fluiddruck aufgebrachten Druck zu erfassen, und eingerichtet, um ein elektrisches Signal auszugeben, das den Fluiddruck darstellt, und
- einen Halter (27) zum Tragen des Druckgebers (20), wobei der Halter (27) im Inneren des Gehäuses (12) auf einer Seite des Druckgebers (20) angeordnet ist, die in Bezug auf die Spitze (25) gegenüberliegend ist, wobei der Halter einen Bereich in Kontakt mit dem ersten Ende (12a) des Gehäuses (12) hat und wobei der Halter (27) einen Wärmeausdehnungskoeffizienten hat, der so ausgewählt ist, dass, während sich die Temperatur ändert, die Ausdehnung entlang der Achse (X) des Halters (27) der axialen Ausdehnung des Gehäuses (12) entspricht, wodurch die Menge des Druckkontakts unverändert gehalten wird, während sich die Temperatur für denselben Druck ändert, **dadurch gekennzeichnet, dass** er eine Schweißstelle (S) umfasst, um den Teil des Halters (27) an das erste Ende (12a) des Gehäuses (12) zu schweißen, wobei die Schweißstelle (S) einen 0-Referenzpunkt (0) bildet, wodurch Abstände (L_{0T}, L_{0P}) zwischen dem 0-Referenzpunkt und den Kontaktpunkten (P, T) des Druckgebers (20) und der Spitze (25) jeweils festgelegt werden, und wobei die Wärmeausdehnung des Halters (27) und des Gehäuses (12) innerhalb der Abstände (L_{0T}, L_{0P}) gleich sind.

2. Drucksensor nach Anspruch 1, **dadurch gekennzeichnet, dass** der Halter (27) entlang der Hauptachse (X) angeordnet ist.

3. Drucksensor nach Anspruch 1, **dadurch gekennzeichnet, dass** der Halter (27) wenigstens ein Isolierelement (42), das den Geber (20) trägt und das einen bestimmten Wärmeausdehnungskoeffizienten aufweist, der niedriger als der Wärmeausdehnungskoeffizient des Gehäuses (12) ist, und einen Basiskörper (30, 32) enthält, der einen bestimmten Wärmeausdehnungskoeffizienten aufweist, der höher als der Wärmeausdehnungskoeffizient des Gehäuses (12) ist, wobei die Schweißstelle (S) zwischen einem Teil des Basiskörpers (30, 32) des Halters und dem Ende (12a) des Gehäuses (12) ausgebildet ist

4. Sensor nach Anspruch 3, **dadurch gekennzeichnet, dass** das Isolierelement (42) aus Aluminium gebildet ist.

5. Sensor nach Anspruch 3, **dadurch gekennzeichnet, dass** das Gehäuse (12) aus Stahl 15-5 PH H900 gebildet ist.

6. Sensor nach Anspruch 3, **dadurch gekennzeichnet, dass** der Basiskörper zwei Elemente umfasst (30, 32), die axial aufeinander überlagert sind, jedes im Wesentlichen in der Form eines zylindrischen Rohrabschnitts.

7. Sensor nach Anspruch 6, wobei die zwei Elemente (30, 32) um ihre ringförmigen Ränder herum zusammengeschweißt sind.

8. Sensor nach Anspruch 7, **dadurch gekennzeichnet, dass** ein erstes (30) der zwei Elemente aus Stahl 304L gebildet ist.

9. Sensor nach Anspruch 7, **dadurch gekennzeichnet, dass** ein zweites (32) der zwei Elemente aus Stahl 15-5 PH H900 gebildet ist.

10. Sensor nach Anspruch 7, **dadurch gekennzeichnet, dass** die zwei Elemente (30, 32) eine Einrichtung (33) des wechselseitigen mechanischen Koppelns enthalten

11. Sensor nach Anspruch 3, **dadurch gekennzeichnet, dass** er ein glockenförmiges Element (43) umfasst, das axial zwischen dem Isolierelement (42) und dem Basiskörper (30, 32) angeordnet ist.

12. Sensor nach Anspruch 11, wobei das glockenförmige Element auf einer Seite an das Isolierelement (42) und auf der anderen Seite an den Basiskörper (30, 32) geschweißt ist

13. Sensor nach Anspruch 12, **dadurch gekennzeichnet, dass** das glockenförmige Element (43) aus Kovar mit einem Wärmeausdehnungskoeffizienten von 4,9 x 10⁻⁶ °C⁻¹ gebildet ist

14. Sensor nach Anspruch 3, **dadurch gekennzeichnet, dass** der Basiskörper ein Element (130) aus Stahl 316L mit einem Wärmeausdehnungskoeffizienten von 16,2 x 10⁻⁶ °C⁻¹ umfasst

15. Sensor nach Anspruch 3, **dadurch gekennzeichnet, dass** der Basiskörper ein Element (230) aus Stahl 304L mit einem Wärmeausdehnungskoeffizienten von 18,3 x 10⁻⁶ °C⁻¹ und ein glockenförmiges Element (43) aus Kovar mit einem Wärmeausdehnungskoeffizienten von 4,9 x 10⁻⁶ °C⁻¹ umfasst

16. Sensor nach Anspruch 1, **dadurch gekennzeichnet, dass** das Gehäuse (12) aus einer Titanlegierung gebildet ist.

17. Sensor nach Anspruch 1, **dadurch gekennzeichnet, dass** der Druckgeber (20) eine Vorrichtung ist, die auf einem Halbleitermaterial strukturiert ist

18. Sensor nach Anspruch 1, **dadurch gekennzeichnet, dass** der Druckgeber (20) in einem in dem Isolierelement (42) ausgebildeten Sitz (45) schwebend eingerichtet ist.

## Revendications

1. Capteur pour capter la pression d'un fluide placé dans un environnement donné et ayant une température définie, lequel capteur comprend:
- un boîtier allongé (12) ayant un axe majeur déterminé (X), et une partie d'extrémité de détection (12b) destinée à être exposée au fluide et une première extrémité (12a) opposée à la partie d'extrémité de détection (12b),
- une pointe (25) associée à l'extrémité de détection (12b) pour une opération sous la pression du fluide,
- un transducteur de pression (20) monté dans le boîtier (12) dans un contact de poussée à un point (T) avec un point (P) de la pointe (25) pour capter la pression appliquée à celui-ci par la pointe (25) selon la pression du fluide, et adapté pour émettre un signal électrique représentatif de ladite pression de fluide, et
- un support (27) pour soutenir le transducteur de pression (20), le support (27) étant positionné à l'intérieur du boîtier (12) sur un côté du transducteur de pression (20) en opposition par rapport à la pointe (25), où le support a une partie en contact avec la première extrémité (12a) du boîtier (12) et où le support (27) a un coefficient de dilatation thermique sélectionné de sorte que, à mesure que la température varie, la dilation le long dudit axe (X) du support (27) égale la dilatation axiale du boîtier (12), gardant ainsi la grandeur du contact de poussée inchangée à mesure que la température varie pour la même pression, **caractérisé en ce qu'**il comprend un cordon de soudure (S) pour souder ladite partie du support (27) à la première extrémité (12a) du boîtier (12), le cordon de soudure (S) formant un point de référence d'origine (O), de sorte que des écartements (L_{OT}, L_{OP}) entre le point de référence d'origine et des points de contact (P, T) du transducteur de pression (20) et la pointe (25) soient respectivement déterminés, la dilation thermique du support (27) et du boîtier (12) dans lesdits écartements (L_{OT}, L_{OP}) étant égales

2. Capteur de pression selon la revendication 1, **caractérisé en ce que** le support (27) est placé le long de l'axe majeur (X).

3. Capteur de pression selon la revendication 1, **caractérisé en ce que** le support (27) inclut au moins un élément d'isolation (42) soutenant le transducteur (20) et ayant un coefficient de dilatation thermique déterminé qui est inférieure au coefficient de dilatation thermique du boîtier (12), et un corps de base (30, 32) ayant un coefficient de dilatation thermique déterminé qui est supérieure au coefficient de dilatation thermique du boîtier (12), où le cordon de soudure (S) est formé entre une partie du corps de base (30, 32) du support et l'extrémité (12a) du boîtier (12).

4. Capteur selon la revendication 3, **caractérisé en ce que** l'élément d'isolation (42) est formé d'alumine.

5. Capteur selon la revendication 3, **caractérisé en ce que** le boîtier (12), est formé en acier 15-5 PH H900,

6. Capteur selon la revendication 3, **caractérisé en ce que** le corps de base comprend deux éléments (30, 32), superposés axialement l'un sur l'autre, chacun étant essentiellement sous forme d'une section de tube cylindrique.

7. Capteur selon la revendication 6, dans lequel les deux éléments (30, 32) sont soudés ensemble autour de leurs bords circulaires,

8. Capteur selon la revendication 7, **caractérisé en ce qu'**un premier élément (30) parmi les deux éléments est formé en acier 304L

9. Capteur selon la revendication 7, **caractérisé en ce qu'**un deuxième élément (32) parmi les deux éléments est formé en acier 15-5 PH H900

10. Capteur selon la revendication 7, **caractérisé en ce que** les deux éléments (30, 32) incluent un moyen (33) d'accouplement mécanique mutuel.

11. Capteur selon la revendication 3, **caractérisé en ce qu'**il comprend un élément en forme de cloche (43) placé axialement entre l'élément d'isolation (42) et le corps de base (30, 32).

12. Capteur selon la revendication 11, où l'élément en forme de cloche est soudé, sur un côté, à l'élément d'isolation (42) et, sur l'autre côté, au corps de base (30, 32)

13. Capteur selon la revendication 12, **caractérisé en ce que** l'élément en forme de cloche (43) est formé en Kovar ayant un coefficient de dilatation thermique de 4,9x 10⁻⁶ °C⁻¹.

14. Capteur selon la revendication 3, **caractérisé en ce que** le corps de base comprend un élément (130) en acier 316L ayant un coefficient de dilatation thermique de 16,2x 10⁻⁶ °C⁻¹.

15. Capteur selon la revendication 3, **caractérisé en ce que** le corps de base comprend un élément (230) en acier 304L ayant un coefficient de dilatation thermique de 18,3x10⁻⁶ °C⁻¹, et un élément en forme de cloche (43) en Kovar ayant un coefficient de dilatation thermique de 4,9x 10⁻⁶ °C⁻¹

16. Capteur selon la revendication 1, **caractérisé en ce que** le boîtier (12) est formé en un alliage de titane

17. Capteur selon la revendication 1, **caractérisé en ce que** le transducteur de pression (20) est un dispositif modelé sur un matériel semi-conducteur

18. Capteur selon la revendication 1, **caractérisé en ce que** le transducteur de pression (20) est établi de manière à être flottant dans un siège (45) formé dans l'organe d'isolation (42).
